# EUROPEAN PATENT SPECIFICATION

(11) **EP 4 205 371 B1**
(45) Date of publication and mention of the grant of the patent: **14.10.2026**
(21) Application number: 21772935.9
(22) Date of filing: 25.08.2021
(51) Int. Cl.: H04L 51/52

(54) **MEDIA CONTENT PLAYBACK AND COMMENTS MANAGEMENT**
MEDIENINHALTSWIEDERGABE UND KOMMENTARVERWALTUNG
LECTURE DE CONTENU MULTIMÉDIA ET GESTION DE COMMENTAIRES

(30) Priority: 31.08.2020 US 202017008376
(43) Date of publication of application: 05.07.2023
(60) Divisional application: 26151768.4 / 4 708 809
(73) Proprietor: Snap Inc., Santa Monica, CA 90405 (US)
(72) Inventor: BOYD, Nathan Kenneth, Santa Monica, California 90405 (US); VOSS, Jeremy Baker, Santa Monica, California 90405 (US)
(74) Representative: Kramer, Dani
(86) International application number: PCT/US2021/071276
(87) International publication number: WO 2022/047477

(56) References cited:
- US-A1- 2016 057 092
- US-A1- 2017 139 920
- US-A1- 2018 048 603

## Description

### PRIORITY APPLICATION

This application is a continuation of, and claims priority to U. S. Patent Application Serial Number 17/008,376, filed August 31, 2020.

### BACKGROUND

Electronic messaging, particularly instant messaging, continues to grow globally in popularity. Users are quickly able to share with one another electronic media content items including text, electronic images, audio, and video instantly.

With the increasing number of users on social networking systems, each user also has a growing network of individuals that she follows. Therefore, in order to maintain the user engagement on social networking systems, it is paramount that the systems have the ability to present to each user the media content items that are most interesting or relevant to the user in question. The social networking systems are presented with the challenge of presenting a user the media content items that have been commented by the user's friends, for the reason that such media content items are the most interesting and relevant to the user.

US 2017/139920 A1 describes a method that includes retrieving comments associated with a content object on a social-networking system, and determining a score for each of the comments, where the score is based on one or more signals associated with the comment, the signals are related to one or more audience interactions with the comment, and each of the audience interactions includes an interaction by a respective audience member with the comment.

US 2018/048603 A1 describes methods for managing social commentary as applicable to social media. A spectrum of weights is assigned to individual portions of the social commentary as a function of a determined measured characteristic.

### BRIEF DESCRIPTION OF THE SEVERAL VIEWS OF THE DRAWINGS

In the drawings, which are not necessarily drawn to scale, like numerals may describe similar components in different views. To easily identify the discussion of any particular element or act, the most significant digit or digits in a reference number refer to the figure number in which that element is first introduced. Some embodiments are illustrated by way of example, and not limitation, in the figures of the accompanying drawings in which:
FIG. 1 is a diagrammatic representation of a networked environment in which the present disclosure may be deployed, in accordance with some examples.
FIG. 2 is a diagrammatic representation of a messaging system, in accordance with some examples, that has both client-side and server-side functionality.
FIG. 3 is a diagrammatic representation of a data structure as maintained in a database, in accordance with some examples.
FIG. 4 is a diagrammatic representation of a message, in accordance with some examples.
FIG. 5 is a flowchart for an access-limiting process, in accordance with some examples.
FIG. 6 illustrates a process 600 of generating a playback of a media content item in accordance with the invention.
FIG. 7 illustrates a user interface 700 displayed on a client device in accordance with one embodiment.
FIG. 8 illustrates a user interface 800 displayed on a client device in accordance with one embodiment.
FIG. 9 illustrates a user interface 900 displayed on a client device in accordance with one embodiment.
FIG. 10 illustrates a user interface 1000 displayed on a client device in accordance with one embodiment.
FIG. 11 illustrates a user interface 1100 displayed on a client device in accordance with one embodiment.
FIG. 12 is a diagrammatic representation of a machine in the form of a computer system within which a set of instructions may be executed for causing the machine to perform the claimed method.
FIG. 13 is a block diagram showing a software architecture within which examples may be implemented.
FIG. 14 is a diagrammatic representation of a processing environment, in accordance with some examples.

### DETAILED DESCRIPTION

In messaging systems, users are connected to a variety of other users with whom they have different levels and types of relationships. For example, a user can be socially connected to a group of users who are close friends, co-workers, acquaintances, as well as people the user does not know outside of the messaging system. The social connection a user can establish with another user in the messaging system may include a unilateral friendship relationship and a bilateral friendship relationship.

The social networking systems are presented with the challenge of providing a user media content items without a showing of comments made by individuals unknown by the user, as such unknown individuals may post irrelevant or sometimes emotionally distressing comments to the media content items shared with the user, negatively affecting user experience. In addition, the social networking systems are also presented with the challenge of withholding a complete comment thread to a user, in view of the fact the user may experience some degree of emotional distress if she fails to receive a further comment from her friends in response to her comment in the thread.

Embodiments of the present disclosure improve the functionality of electronic messaging software and systems by recognizing that a user may want to receive media content items associated with comments only coming from other users with whom the user has established a social relationship (e.g., friendship) on the messaging system. Specifically, the embodiments of the present disclosure relate to generating a playback of media content items available on the messaging system with comments created only by friends of a viewing user. The viewing user may post comments to the media content item. Each comment is associated with a timestamp representing the temporal position during the time of playback when the comment was created. Each comment is displayed during the playback at respective temporal position (e.g., timeline marker), so that the viewing user may experience the creations of the comments from friends.

In some embodiments, upon selection of a comment, the messaging system may direct the user to a private messaging user interface to engage in a private conversation with the comment creator. Therefore, no comment thread is generated for media content items. It helps to advance the goal of avoiding the generation of a complete comment thread viewable by all users, inadvertently causing emotional distress to certain affected users.

The present disclosure also relates to generating notifications of a comment created by a friend of the user associated with a media content item. A pre-determined time period (e.g., a cool-down period) is determined and assessed between the generation of notifications on a client device.

According to the invention, the user may post comments at any time during the display of a media content item. The user may mention other friends in the comments, which may be shared by the messaging system with friends mentioned in the comments. In some embodiments, the media content items are created by commercial content creators or designated users whose user profile is not connected with the viewing user in an entity graph stored in the messaging system. For example, a designated user is not a friend with the user who requests to view the media content item that the designated user has created.

### NETWORKED COMPUTING ENVIRONMENT

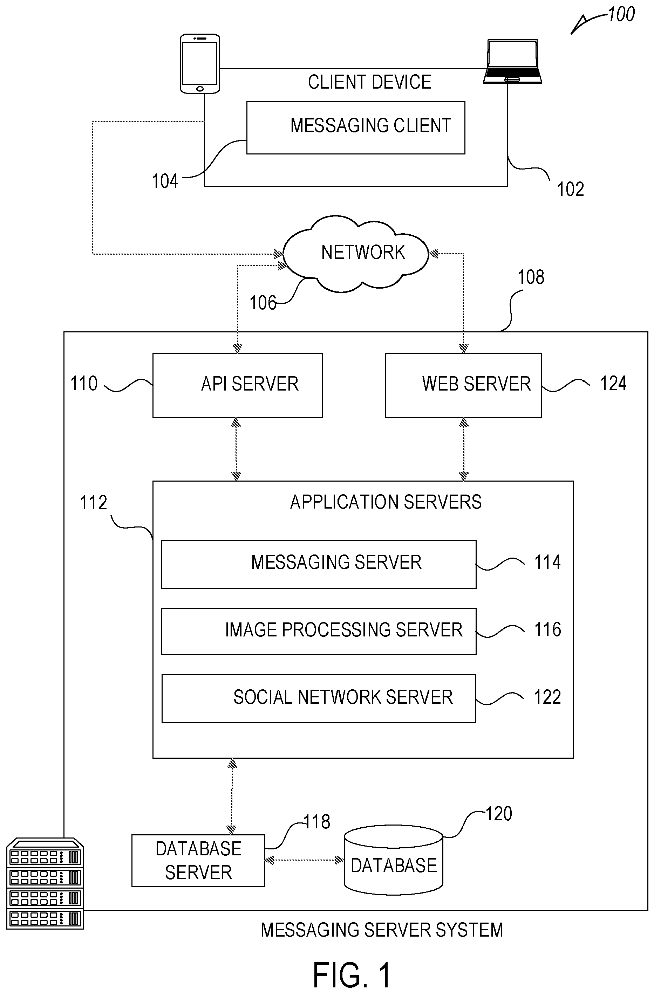

FIG. 1 is a block diagram showing an example messaging system 100 for exchanging data (e.g., messages and associated content) over a network. The messaging system 100 includes multiple instances of a client device 102, each of which hosts a number of applications, including a messaging client 104. Each messaging client 104 is communicatively coupled to other instances of the messaging client 104 and a messaging server system 108 via a network 106 (e.g., the Internet).

A messaging client 104 is able to communicate and exchange data with another messaging client 104 and with the messaging server system 108 via the network 106. The data exchanged between messaging client 104, and between a messaging client 104 and the messaging server system 108, includes functions (e.g., commands to invoke functions) as well as payload data (e.g., text, audio, video or other multimedia data).

The messaging server system 108 provides server-side functionality via the network 106 to a particular messaging client 104. While certain functions of the messaging system 100 are described herein as being performed by either a messaging client 104 or by the messaging server system 108, the location of certain functionality either within the messaging client 104 or the messaging server system 108 may be a design choice. For example, it may be technically preferable to initially deploy certain technology and functionality within the messaging server system 108 but to later migrate this technology and functionality to the messaging client 104 where a client device 102 has sufficient processing capacity.

The messaging server system 108 supports various services and operations that are provided to the messaging client 104. Such operations include transmitting data to, receiving data from, and processing data generated by the messaging client 104. This data may include message content, client device information, geolocation information, media augmentation and overlays, message content persistence conditions, social network information, and live event information, as examples. Data exchanges within the messaging system 100 are invoked and controlled through functions available via user interfaces (UIs) of the messaging client 104.

Turning now specifically to the messaging server system 108, an Application Program Interface (API) server 110 is coupled to, and provides a programmatic interface to, application servers 112. The application servers 112 are communicatively coupled to a database server 118, which facilitates access to a database 120 that stores data associated with messages processed by the application servers 112. Similarly, a web server 124 is coupled to the application servers 112 and provides web-based interfaces to the application servers 112. To this end, the web server 124 processes incoming network requests over the Hypertext Transfer Protocol (HTTP) and several other related protocols.

The Application Program Interface (API) server 110 receives and transmits message data (e.g., commands and message payloads) between the client device 102 and the application servers 112. Specifically, the Application Program Interface (API) server 110 provides a set of interfaces (e.g., routines and protocols) that can be called or queried by the messaging client 104 in order to invoke functionality of the application servers 112. The Application Program Interface (API) server 110 exposes various functions supported by the application servers 112, including account registration, login functionality, the sending of messages, via the application servers 112, from a particular messaging client 104 to another messaging client 104, the sending of media files (e.g., images or video) from a messaging client 104 to a messaging server 114, and for possible access by another messaging client 104, the settings of a collection of media data (e.g., story), the retrieval of a list of friends of a user of a client device 102, the retrieval of such collections, the retrieval of messages and content, the addition and deletion of entities (e.g., friends) to an entity graph (e.g., a social graph), the location of friends within a social graph, and opening an application event (e.g., relating to the messaging client 104).

The application servers 112 host a number of server applications and subsystems, including for example a messaging server 114, an image processing server 116, and a social network server 122. The messaging server 114 implements a number of message processing technologies and functions, particularly related to the aggregation and other processing of content (e.g., textual and multimedia content) included in messages received from multiple instances of the messaging client 104. As will be described in further detail, the text and media content from multiple sources may be aggregated into collections of content (e.g., called stories or galleries). These collections are then made available to the messaging client 104. Other processor and memory intensive processing of data may also be performed server-side by the messaging server 114, in view of the hardware requirements for such processing.

The application servers 112 also include an image processing server 116 that is dedicated to performing various image processing operations, typically with respect to images or video within the payload of a message sent from or received at the messaging server 114.

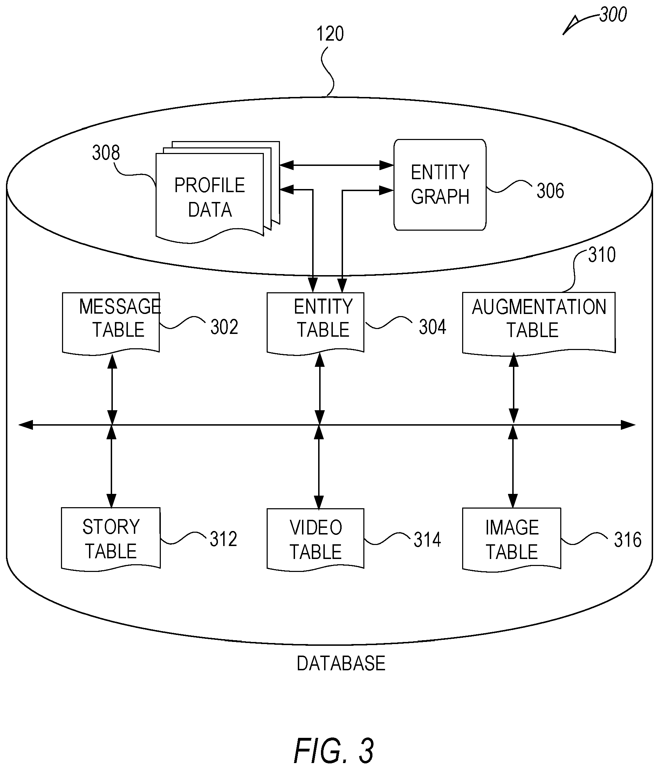

The social network server 122 supports various social networking functions and services and makes these functions and services available to the messaging server 114. To this end, the social network server 122 maintains and accesses an entity graph 306 (as shown in FIG. 3) within the database 120. Examples of functions and services supported by the social network server 122 include the identification of other users of the messaging system 100 with which a particular user has relationships or is "following," and also the identification of other entities and interests of a particular user.

### SYSTEM ARCHITECTURE

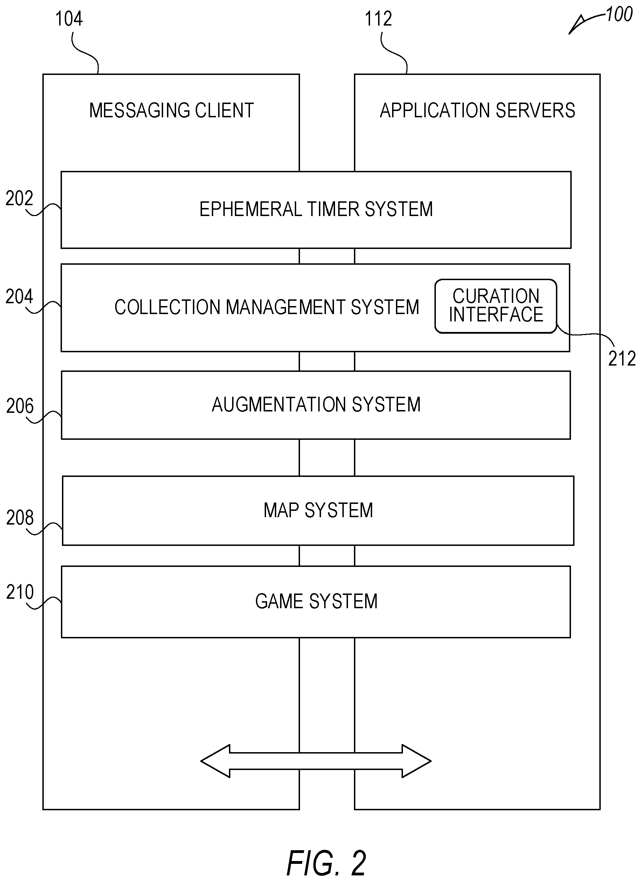

FIG. 2 is a block diagram illustrating further details regarding the messaging system 100, according to some examples. Specifically, the messaging system 100 is shown to comprise the messaging client 104 and the application servers 112. The messaging system 100 embodies a number of subsystems, which are supported on the client-side by the messaging client 104 and on the sever-side by the application servers 112. These subsystems include, for example, an ephemeral timer system 202, a collection management system 204, an augmentation system 206, a map system 208, and a game system 210.

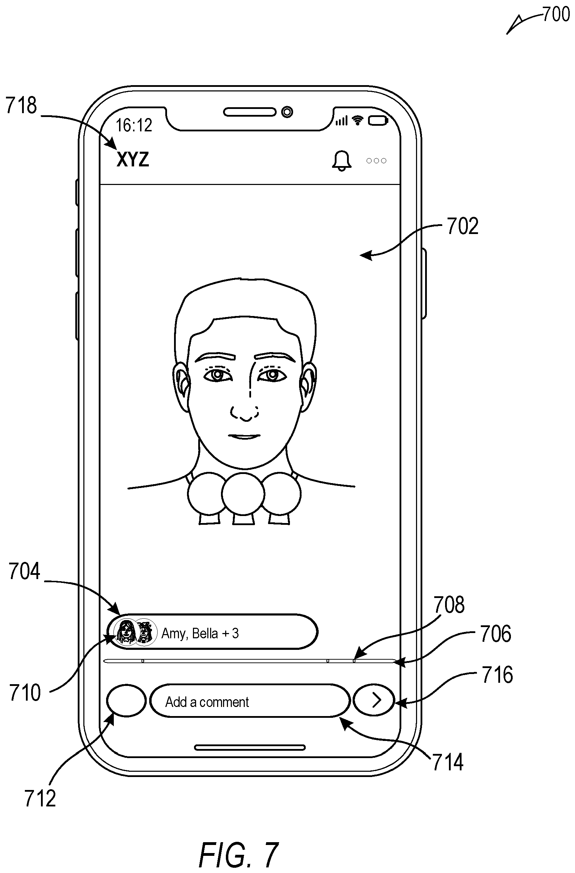

The ephemeral timer system 202 is responsible for enforcing the temporary or time-limited access to content by the messaging client 104 and the messaging server 114. The ephemeral timer system 202 incorporates a number of timers that, based on duration and display parameters associated with a message, or collection of messages (e.g., a story), selectively enable access (e.g., for presentation and display) to messages and associated content via the messaging client 104. Further details regarding the operation of the ephemeral timer system 202 are provided below. In one embodiment, the ephemeral timer system 202 is also responsible for determining a pre-determined duration of time for playback of media content items, such as the media content item 702 as shown in FIG. 7. In one embodiment, the ephemeral timer system 202 is further responsible for determining a pre-determined time duration of the display of a comment during the playback of a media content item.

The collection management system 204 is responsible for managing sets or collections of media (e.g., collections of text, image video, and audio data). A collection of content (e.g., messages, including images, video, text, and audio) may be organized into an "event gallery" or an "event story." Such a collection may be made available for a specified time period, such as the duration of an event to which the content relates. For example, content relating to a music concert may be made available for the duration of that music concert. The collection management system 204 may also be responsible for publishing an icon that provides notification of the existence of a particular collection to the user interface of the messaging client 104.

The collection management system 204 furthermore includes a curation interface 212 that allows a collection manager to manage and curate a particular collection of content. For example, the curation interface 212 enables an event organizer to curate a collection of content relating to a specific event (e.g., delete inappropriate content or redundant messages). Additionally, the collection management system 204 employs machine vision (or image recognition technology) and content rules to automatically curate a content collection. In certain examples, compensation may be paid to a user for the inclusion of user-generated content into a collection. In such cases, the collection management system 204 operates to automatically make payments to such users for the use of their content.

Collection management system 204 is responsible for managing a collection of media content items that can be viewed and commented by users in the messaging server system 108. The collection of media content items may include media content items created by commercial content creators or designated users. The commercial content creator may be a third party publisher, such as New York Times, Vice, etc. The designated users may include users who have a large number of followers. User profiles may be stored as profile data 308 in the entity table 304 in the database 120. The number of followers is determined by a number of user profiles being unilaterally connected to the designated user profile in the entity table 304. Specifically, the type of connections between two user profiles may include a bilateral connection and a unilateral connection, respectively represented by a bilateral connection identifier and a unilateral connection identifier associated with each user profile in the entity table 304. The bilateral connection indicates the connected users have each responded to a friendship request sent from the other user via a client device 102. The unilateral connection indicates only one of the two connected users has requested friendship connection, but the requested user has not responded to or has denied such request. The number of followers of the designated user is determined by the number of unilaterally connected user profiles associated with users who have requested friendship connection with the designated user, but the designated user has not responded to or has denied the request. A number of friends of a user may be determined by a number of bilaterally connected user profiles in the entity table 304.

In one example, designated user is determined by an administrator of the messaging server system 108. The user profile associated with the designated user is absent from the set of connected profiles. Specifically, the designated user has not established a bilateral connection with the user who requests to view the media content item the designated user has created.

In one example, collection management system 204 is responsible for causing a display of only the comments created by friends of a user who requests to view a media content item. In one embodiment, when the collection management system 204 causes a client device 102 to playback a media content item (e.g., a video or an image), an image is displayed within a pre-determined duration of time, such as five seconds. A video displays for the duration the video lasts. Each comment created by a user for a media content item is associated with a user profile and a timestamp representing a time within the duration of time displaying a media content item in which each comment was created.

The augmentation system 206 provides various functions that enable a user to augment (e.g., annotate or otherwise modify or edit) media content associated with a message. For example, the augmentation system 206 provides functions related to the generation and publishing of media overlays for messages processed by the messaging system 100. The augmentation system 206 operatively supplies a media overlay or augmentation (e.g., an image filter) to the messaging client 104 based on a geolocation of the client device 102. In another example, the augmentation system 206 operatively supplies a media overlay to the messaging client 104 based on other information, such as social network information of the user of the client device 102. A media overlay may include audio and visual content and visual effects. Examples of audio and visual content include pictures, texts, logos, animations, and sound effects. An example of a visual effect includes color overlaying. The audio and visual content or the visual effects can be applied to a media content item (e.g., a photo) at the client device 102. For example, the media overlay may include text or image that can be overlaid on top of a photograph taken by the client device 102. In another example, the media overlay includes an identification of a location overlay (e.g., Venice beach), a name of a live event, or a name of a merchant overlay (e.g., Beach Coffee House). In another example, the augmentation system 206 uses the geolocation of the client device 102 to identify a media overlay that includes the name of a merchant at the geolocation of the client device 102. The media overlay may include other indicia associated with the merchant. The media overlays may be stored in the database 120 and accessed through the database server 118.

In some examples, the augmentation system 206 provides a user-based publication platform that enables users to select a geolocation on a map and upload content associated with the selected geolocation. The user may also specify circumstances under which a particular media overlay should be offered to other users. The augmentation system 206 generates a media overlay that includes the uploaded content and associates the uploaded content with the selected geolocation.

In other examples, the augmentation system 206 provides a merchant-based publication platform that enables merchants to select a particular media overlay associated with a geolocation via a bidding process. For example, the augmentation system 206 associates the media overlay of the highest bidding merchant with a corresponding geolocation for a predefined amount of time.

The map system 208 provides various geographic location functions and supports the presentation of map-based media content and messages by the messaging client 104. For example, the map system 208 enables the display of user icons or avatars (e.g., stored in profile data 308) on a map to indicate a current or past location of "friends" of a user, as well as media content (e.g., collections of messages including photographs and videos) generated by such friends, within the context of a map. For example, a message posted by a user to the messaging system 100 from a specific geographic location may be displayed within the context of a map at that particular location to "friends" of a specific user on a map interface of the messaging client 104. A user can furthermore share his or her location and status information (e.g., using an appropriate status avatar) with other users of the messaging system 100 via the messaging client 104, with this location and status information being similarly displayed within the context of a map interface of the messaging client 104 to selected users.

The game system 210 provides various gaming functions within the context of the messaging client 104. The messaging client 104 provides a game interface providing a list of available games that can be launched by a user within the context of the messaging client 104, and played with other users of the messaging system 100. The messaging system 100 further enables a particular user to invite other users to participate in the play of a specific game, by issuing invitations to such other users from the messaging client 104. The messaging client 104 also supports both the voice and text messaging (e.g., chats) within the context of gameplay, provides a leaderboard for the games, and also supports the provision of in-game rewards (e.g., coins and items).

### DATA ARCHITECTURE

FIG. 3 is a schematic diagram illustrating data structures 300, which may be stored in the database 120 of the messaging server system 108, according to certain examples. While the content of the database 120 is shown to comprise a number of tables, it will be appreciated that the data could be stored in other types of data structures (e.g., as an object-oriented database).

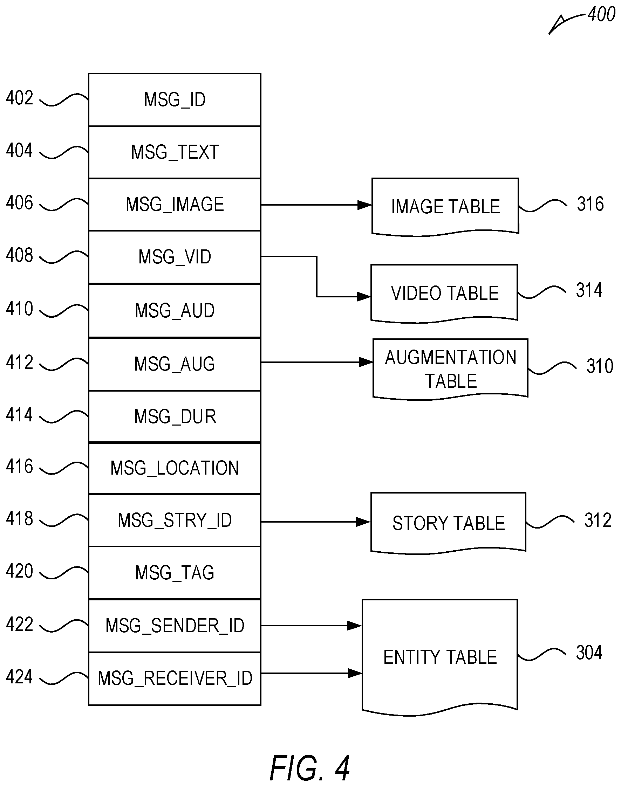

The database 120 includes message data stored within a message table 302. This message data includes, for any particular one message, at least message sender data, message recipient (or receiver) data, and a payload. Further details regarding information that may be included in a message, and included within the message data stored in the message table 302 is described below with reference to FIG. 4.

An entity table 304 stores entity data, and is linked (e.g., referentially) to an entity graph 306 and profile data 308. Entities for which records are maintained within the entity table 304 may include individuals, corporate entities, organizations, objects, places, events, and so forth. Regardless of entity type, any entity regarding which the messaging server system 108 stores data may be a recognized entity. Each entity is provided with a unique identifier, as well as an entity type identifier (not shown).

The entity graph 306 stores information regarding relationships and associations between entities. Such relationships may be social, professional (e.g., work at a common corporation or organization) interested-based or activity-based, merely for example.

The profile data 308 stores multiple types of profile data about a particular entity. The profile data 308 may be selectively used and presented to other users of the messaging system 100, based on privacy settings specified by a particular entity. Where the entity is an individual, the profile data 308 includes, for example, a user name, telephone number, address, settings (e.g., notification and privacy settings), as well as a user-selected avatar representation (or collection of such avatar representations). A particular user may then selectively include one or more of these avatar representations within the content of messages communicated via the messaging system 100, and on map interfaces displayed by messaging clients 104 to other users. The collection of avatar representations may include "status avatars," which present a graphical representation of a status or activity that the user may select to communicate at a particular time.

Where the entity is a group, the profile data 308 for the group may similarly include one or more avatar representations associated with the group, in addition to the group name, members, and various settings (e.g., notifications) for the relevant group.

The database 120 also stores augmentation data, such as overlays or filters, in an augmentation table 310. The augmentation data is associated with and applied to videos (for which data is stored in a video table 314) and images (for which data is stored in an image table 316).

Filters, in one example, are overlays that are displayed as overlaid on an image or video during presentation to a recipient user. Filters may be of various types, including user-selected filters from a set of filters presented to a sending user by the messaging client 104 when the sending user is composing a message. Other types of filters include geolocation filters (also known as geo-filters), which may be presented to a sending user based on geographic location. For example, geolocation filters specific to a neighborhood or special location may be presented within a user interface by the messaging client 104, based on geolocation information determined by a Global Positioning System (GPS) unit of the client device 102.

Another type of filter is a data filter, which may be selectively presented to a sending user by the messaging client 104, based on other inputs or information gathered by the client device 102 during the message creation process. Examples of data filters include current temperature at a specific location, a current speed at which a sending user is traveling, battery life for a client device 102, or the current time.

Other augmentation data that may be stored within the image table 316 includes augmented reality content items (e.g., corresponding to applying Lenses or augmented reality experiences). An augmented reality content item may be a real-time special effect and sound that may be added to an image or a video.

As described above, augmentation data includes augmented reality content items, overlays, image transformations, AR images, and similar terms refer to modifications that may be applied to image data (e.g., videos or images). This includes real-time modifications, which modify an image as it is captured using device sensors (e.g., one or multiple cameras) of a client device 102 and then displayed on a screen of the client device 102 with the modifications. This also includes modifications to stored content, such as video clips in a gallery that may be modified. For example, in a client device 102 with access to multiple augmented reality content items, a user can use a single video clip with multiple augmented reality content items to see how the different augmented reality content items will modify the stored clip. For example, multiple augmented reality content items that apply different pseudorandom movement models can be applied to the same content by selecting different augmented reality content items for the content. Similarly, real-time video capture may be used with an illustrated modification to show how video images currently being captured by sensors of a client device 102 would modify the captured data. Such data may simply be displayed on the screen and not stored in memory, or the content captured by the device sensors may be recorded and stored in memory with or without the modifications (or both). In some systems, a preview feature can show how different augmented reality content items will look within different windows in a display at the same time. This can, for example, enable multiple windows with different pseudorandom animations to be viewed on a display at the same time.

Data and various systems using augmented reality content items or other such transformation systems to modify content using this data can thus involve detection of objects (e.g., faces, hands, bodies, cats, dogs, surfaces, objects, etc.), tracking of such objects as they leave, enter, and move around the field of view in video frames, and the modification or transformation of such objects as they are tracked. In various embodiments, different methods for achieving such transformations may be used. Some examples may involve generating a three-dimensional mesh model of the object or objects, and using transformations and animated textures of the model within the video to achieve the transformation. In other examples, tracking of points on an object may be used to place an image or texture (which may be two dimensional or three dimensional) at the tracked position. In still further examples, neural network analysis of video frames may be used to place images, models, or textures in content (e.g., images or frames of video). Augmented reality content items thus refer both to the images, models, and textures used to create transformations in content, as well as to additional modeling and analysis information needed to achieve such transformations with object detection, tracking, and placement.

Real-time video processing can be performed with any kind of video data (e.g., video streams, video files, etc.) saved in a memory of a computerized system of any kind. For example, a user can load video files and save them in a memory of a device, or can generate a video stream using sensors of the device. Additionally, any objects can be processed using a computer animation model, such as a human's face and parts of a human body, animals, or non-living things such as chairs, cars, or other objects.

In some examples, when a particular modification is selected along with content to be transformed, elements to be transformed are identified by the computing device, and then detected and tracked if they are present in the frames of the video. The elements of the object are modified according to the request for modification, thus transforming the frames of the video stream. Transformation of frames of a video stream can be performed by different methods for different kinds of transformation. For example, for transformations of frames mostly referring to changing forms of object's elements characteristic points for each element of an object are calculated (e.g., using an Active Shape Model (ASM) or other known methods). Then, a mesh based on the characteristic points is generated for each of the at least one element of the object. This mesh used in the following stage of tracking the elements of the object in the video stream. In the process of tracking, the mentioned mesh for each element is aligned with a position of each element. Then, additional points are generated on the mesh. A first set of first points is generated for each element based on a request for modification, and a set of second points is generated for each element based on the set of first points and the request for modification. Then, the frames of the video stream can be transformed by modifying the elements of the object on the basis of the sets of first and second points and the mesh. In such method, a background of the modified object can be changed or distorted as well by tracking and modifying the background.

In some examples, transformations changing some areas of an object using its elements can be performed by calculating characteristic points for each element of an object and generating a mesh based on the calculated characteristic points. Points are generated on the mesh, and then various areas based on the points are generated. The elements of the object are then tracked by aligning the area for each element with a position for each of the at least one element, and properties of the areas can be modified based on the request for modification, thus transforming the frames of the video stream. Depending on the specific request for modification properties of the mentioned areas can be transformed in different ways. Such modifications may involve changing color of areas; removing at least some part of areas from the frames of the video stream; including one or more new objects into areas which are based on a request for modification; and modifying or distorting the elements of an area or object. In various embodiments, any combination of such modifications or other similar modifications may be used. For certain models to be animated, some characteristic points can be selected as control points to be used in determining the entire state-space of options for the model animation.

In some examples of a computer animation model to transform image data using face detection, the face is detected on an image with use of a specific face detection algorithm (e.g., Viola-Jones). Then, an Active Shape Model (ASM) algorithm is applied to the face region of an image to detect facial feature reference points.

In other examples, other methods and algorithms suitable for face detection can be used. For example, in some embodiments, features are located using a landmark, which represents a distinguishable point present in most of the images under consideration. For facial landmarks, for example, the location of the left eye pupil may be used. If an initial landmark is not identifiable (e.g., if a person has an eyepatch), secondary landmarks may be used. Such landmark identification procedures may be used for any such objects. In some examples, a set of landmarks forms a shape. Shapes can be represented as vectors using the coordinates of the points in the shape. One shape is aligned to another with a similarity transform (allowing translation, scaling, and rotation) that minimizes the average Euclidean distance between shape points. The mean shape is the mean of the aligned training shapes.

In some examples, a search for landmarks from the mean shape aligned to the position and size of the face determined by a global face detector is started. Such a search then repeats the steps of suggesting a tentative shape by adjusting the locations of shape points by template matching of the image texture around each point and then conforming the tentative shape to a global shape model until convergence occurs. In some systems, individual template matches are unreliable, and the shape model pools the results of the weak template matches to form a stronger overall classifier. The entire search is repeated at each level in an image pyramid, from coarse to fine resolution.

A transformation system can capture an image or video stream on a client device (e.g., the client device 102) and perform complex image manipulations locally on the client device 102 while maintaining a suitable user experience, computation time, and power consumption. The complex image manipulations may include size and shape changes, emotion transfers (e.g., changing a face from a frown to a smile), state transfers (e.g., aging a subject, reducing apparent age, changing gender), style transfers, graphical element application, and any other suitable image or video manipulation implemented by a convolutional neural network that has been configured to execute efficiently on the client device 102.

In some examples, a computer animation model to transform image data can be used by a system where a user may capture an image or video stream of the user (e.g., a selfie) using a client device 102 having a neural network operating as part of a messaging client application 104 operating on the client device 102. The transformation system operating within the messaging client 104 determines the presence of a face within the image or video stream and provides modification icons associated with a computer animation model to transform image data, or the computer animation model can be present as associated with an interface described herein. The modification icons include changes that may be the basis for modifying the user's face within the image or video stream as part of the modification operation. Once a modification icon is selected, the transformation system initiates a process to convert the image of the user to reflect the selected modification icon (e.g., generate a smiling face on the user). A modified image or video stream may be presented in a graphical user interface displayed on the client device 102 as soon as the image or video stream is captured, and a specified modification is selected. The transformation system may implement a complex convolutional neural network on a portion of the image or video stream to generate and apply the selected modification. That is, the user may capture the image or video stream and be presented with a modified result in real-time or near real-time once a modification icon has been selected. Further, the modification may be persistent while the video stream is being captured, and the selected modification icon remains toggled. Machine taught neural networks may be used to enable such modifications.

The graphical user interface, presenting the modification performed by the transformation system, may supply the user with additional interaction options. Such options may be based on the interface used to initiate the content capture and selection of a particular computer animation model (e.g., initiation from a content creator user interface). In various embodiments, a modification may be persistent after an initial selection of a modification icon. The user may toggle the modification on or off by tapping or otherwise selecting the face being modified by the transformation system and store it for later viewing or browse to other areas of the imaging application. Where multiple faces are modified by the transformation system, the user may toggle the modification on or off globally by tapping or selecting a single face modified and displayed within a graphical user interface. In some embodiments, individual faces, among a group of multiple faces, may be individually modified, or such modifications may be individually toggled by tapping or selecting the individual face or a series of individual faces displayed within the graphical user interface.

A story table 312 stores data regarding collections of messages and associated image, video, or audio data, which are compiled into a collection (e.g., a story or a gallery). The creation of a particular collection may be initiated by a particular user (e.g., each user for which a record is maintained in the entity table 304). A user may create a "personal story" in the form of a collection of content that has been created and sent/broadcast by that user. To this end, the user interface of the messaging client 104 may include an icon that is user-selectable to enable a sending user to add specific content to his or her personal story.

A collection may also constitute a "live story," which is a collection of content from multiple users that is created manually, automatically, or using a combination of manual and automatic techniques. For example, a "live story" may constitute a curated stream of usersubmitted content from various locations and events. Users whose client devices have location services enabled and are at a common location event at a particular time may, for example, be presented with an option, via a user interface of the messaging client 104, to contribute content to a particular live story. The live story may be identified to the user by the messaging client 104, based on his or her location. The end result is a "live story" told from a community perspective.

A further type of content collection is known as a "location story," which enables a user whose client device 102 is located within a specific geographic location (e.g., on a college or university campus) to contribute to a particular collection. In some examples, a contribution to a location story may require a second degree of authentication to verify that the end user belongs to a specific organization or other entity (e.g., is a student on the university campus).

As mentioned above, the video table 314 stores video data that, in one example, is associated with messages for which records are maintained within the message table 302. Similarly, the image table 316 stores image data associated with messages for which message data is stored in the entity table 304. The entity table 304 may associate various augmentations from the augmentation table 310 with various images and videos stored in the image table 316 and the video table 314. In one embodiment, the image table 316 stores image data associated with an image-type media content item and the comments associated with the image. The video table 314 stores video data associated with a video-type media content item and the comments associated with the video.

### DATA COMMUNICATIONS ARCHITECTURE

FIG. 4 is a schematic diagram illustrating a structure of a message 400, according to some examples, generated by a messaging client 104 for communication to a further messaging client 104 or the messaging server 114. The content of a particular message 400 is used to populate the message table 302 stored within the database 120, accessible by the messaging server 114. Similarly, the content of a message 400 is stored in memory as "intransit" or "in-flight" data of the client device 102 or the application servers 112. A message 400 is shown to include the following example components:
- message identifier 402: a unique identifier that identifies the message 400.
- message text payload 404: text, to be generated by a user via a user interface of the client device 102, and that is included in the message 400.
- message image payload 406: image data, captured by a camera component of a client device 102 or retrieved from a memory component of a client device 102, and that is included in the message 400. Image data for a sent or received message 400 may be stored in the image table 316.
- message video payload 408: video data, captured by a camera component or retrieved from a memory component of the client device 102, and that is included in the message 400. Video data for a sent or received message 400 may be stored in the video table 314.
- message audio payload 410: audio data, captured by a microphone or retrieved from a memory component of the client device 102, and that is included in the message 400.
- message augmentation data 412: augmentation data (e.g., filters, stickers, or other annotations or enhancements) that represents augmentations to be applied to message image payload 406, message video payload 408, or message audio payload 410 of the message 400. Augmentation data for a sent or received message 400 may be stored in the augmentation table 310.
- message duration parameter 414: parameter value indicating, in seconds, the amount of time for which content of the message (e.g., the message image payload 406, message video payload 408, message audio payload 410) is to be presented or made accessible to a user via the messaging client 104.
- message geolocation parameter 416: geolocation data (e.g., latitudinal and longitudinal coordinates) associated with the content payload of the message. Multiple message geolocation parameter 416 values may be included in the payload, each of these parameter values being associated with respect to content items included in the content (e.g., a specific image into within the message image payload 406, or a specific video in the message video payload 408).
- message story identifier 418: identifier values identifying one or more content collections (e.g., "stories" identified in the story table 312) with which a particular content item in the message image payload 406 of the message 400 is associated. For example, multiple images within the message image payload 406 may each be associated with multiple content collections using identifier values.
- message tag 420: each message 400 may be tagged with multiple tags, each of which is indicative of the subject matter of content included in the message payload. For example, where a particular image included in the message image payload 406 depicts an animal (e.g., a lion), a tag value may be included within the message tag 420 that is indicative of the relevant animal. Tag values may be generated manually, based on user input, or may be automatically generated using, for example, image recognition.
- message sender identifier 422: an identifier (e.g., a messaging system identifier, email address, or device identifier) indicative of a user of the client device 102 on which the message 400 was generated and from which the message 400 was sent.
- message receiver identifier 424: an identifier (e.g., a messaging system identifier, email address, or device identifier) indicative of a user of the client device 102 to which the message 400 is addressed.

The contents (e.g., values) of the various components of message 400 may be pointers to locations in tables within which content data values are stored. For example, an image value in the message image payload 406 may be a pointer to (or address of) a location within an image table 316. Similarly, values within the message video payload 408 may point to data stored within a video table 314, values stored within the message augmentations data 412 may point to data stored in an augmentation table 310, values stored within the message story identifier 418 may point to data stored in a story table 312, and values stored within the message sender identifier 422 and the message receiver identifier 424 may point to user records stored within an entity table 304.

### TIME-BASED ACCESS LIMITATION ARCHITECTURE

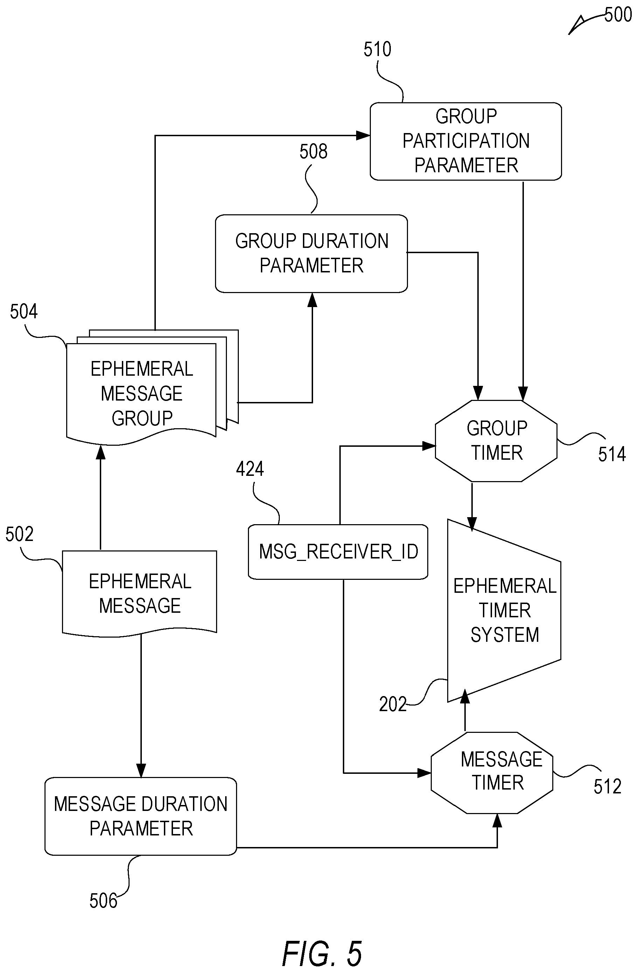

FIG. 5 is a schematic diagram illustrating an access-limiting process 500, in terms of which access to content (e.g., an ephemeral message 502, and associated multimedia payload of data) or a content collection (e.g., an ephemeral message group 504) may be time-limited (e.g., made ephemeral).

An ephemeral message 502 is shown to be associated with a message duration parameter 506, the value of which determines an amount of time that the ephemeral message 502 will be displayed to a receiving user of the ephemeral message 502 by the messaging client 104. In one example, an ephemeral message 502 is viewable by a receiving user for up to a maximum of 10 seconds, depending on the amount of time that the sending user specifies using the message duration parameter 506. In one embodiment, the ephemeral message 502 may include a media content item, such as the media content item 702 as shown in FIG. 7. The ephemeral message 502 may include a comment displayed during the playback of a media content item.

The message duration parameter 506 and the message receiver identifier 424 are shown to be inputs to a message timer 512, which is responsible for determining the amount of time that the ephemeral message 502 is shown to a particular receiving user identified by the message receiver identifier 424. In particular, the ephemeral message 502 will only be shown to the relevant receiving user for a time period determined by the value of the message duration parameter 506. The message timer 512 is shown to provide output to a more generalized ephemeral timer system 202, which is responsible for the overall timing of display of content (e.g., an ephemeral message 502) to a receiving user. In one embodiment, the message duration parameter 506 includes a pre-determined duration of time of media content playback, a pre-defined time duration for a display of a comment during a media content playback.

The ephemeral message 502 is shown in FIG. 5 to be included within an ephemeral message group 504 (e.g., a collection of messages in a personal story, or an event story). The ephemeral message group 504 has an associated group duration parameter 508, a value of which determines a time duration for which the ephemeral message group 504 is presented and accessible to users of the messaging system 100. The group duration parameter 508, for example, may be the duration of a music concert, where the ephemeral message group 504 is a collection of content pertaining to that concert. Alternatively, a user (either the owning user or a curator user) may specify the value for the group duration parameter 508 when performing the setup and creation of the ephemeral message group 504.

Additionally, each ephemeral message 502 within the ephemeral message group 504 has an associated group participation parameter 510, a value of which determines the duration of time for which the ephemeral message 502 will be accessible within the context of the ephemeral message group 504. Accordingly, a particular ephemeral message group 504 may "expire" and become inaccessible within the context of the ephemeral message group 504, prior to the ephemeral message group 504 itself expiring in terms of the group duration parameter 508. The group duration parameter 508, group participation parameter 510, and message receiver identifier 424 each provide input to a group timer 514, which operationally determines, firstly, whether a particular ephemeral message 502 of the ephemeral message group 504 will be displayed to a particular receiving user and, if so, for how long. Note that the ephemeral message group 504 is also aware of the identity of the particular receiving user as a result of the message receiver identifier 424.

Accordingly, the group timer 514 operationally controls the overall lifespan of an associated ephemeral message group 504, as well as an individual ephemeral message 502 included in the ephemeral message group 504. In one example, each and every ephemeral message 502 within the ephemeral message group 504 remains viewable and accessible for a time period specified by the group duration parameter 508. In a further example, a certain ephemeral message 502 may expire, within the context of ephemeral message group 504, based on a group participation parameter 510. Note that a message duration parameter 506 may still determine the duration of time for which a particular ephemeral message 502 is displayed to a receiving user, even within the context of the ephemeral message group 504. Accordingly, the message duration parameter 506 determines the duration of time that a particular ephemeral message 502 is displayed to a receiving user, regardless of whether the receiving user is viewing that ephemeral message 502 inside or outside the context of an ephemeral message group 504.

The ephemeral timer system 202 may furthermore operationally remove a particular ephemeral message 502 from the ephemeral message group 504 based on a determination that it has exceeded an associated group participation parameter 510. For example, when a sending user has established a group participation parameter 510 of 24 hours from posting, the ephemeral timer system 202 will remove the relevant ephemeral message 502 from the ephemeral message group 504 after the specified 24 hours. The ephemeral timer system 202 also operates to remove an ephemeral message group 504 when either the group participation parameter 510 for each and every ephemeral message 502 within the ephemeral message group 504 has expired, or when the ephemeral message group 504 itself has expired in terms of the group duration parameter 508.

In certain use cases, a creator of a particular ephemeral message group 504 may specify an indefinite group duration parameter 508. In this case, the expiration of the group participation parameter 510 for the last remaining ephemeral message 502 within the ephemeral message group 504 will determine when the ephemeral message group 504 itself expires. In this case, a new ephemeral message 502, added to the ephemeral message group 504, with a new group participation parameter 510, effectively extends the life of an ephemeral message group 504 to equal the value of the group participation parameter 510.

Responsive to the ephemeral timer system 202 determining that an ephemeral message group 504 has expired (e.g., is no longer accessible), the ephemeral timer system 202 communicates with the messaging system 100 (and, for example, specifically the messaging client 104) to cause an indicium (e.g., an icon) associated with the relevant ephemeral message group 504 to no longer be displayed within a user interface of the messaging client 104. Similarly, when the ephemeral timer system 202 determines that the message duration parameter 506 for a particular ephemeral message 502 has expired, the ephemeral timer system 202 causes the messaging client 104 to no longer display an indicium (e.g., an icon or textual identification) associated with the ephemeral message 502.

### MEDIA CONTENT PLAYBACK AND COMMENTS MANAGEMENT

According to the invention, a user associated with the first client device 102 sends a request to the messaging server system 108 to view a media content item. The messaging server system 108 determines, based on connections of user profiles in entity graph 306, at least one comment from a connected user profile (e.g., friends) at a particular time in which the one comment was created during the playback of the media content item.

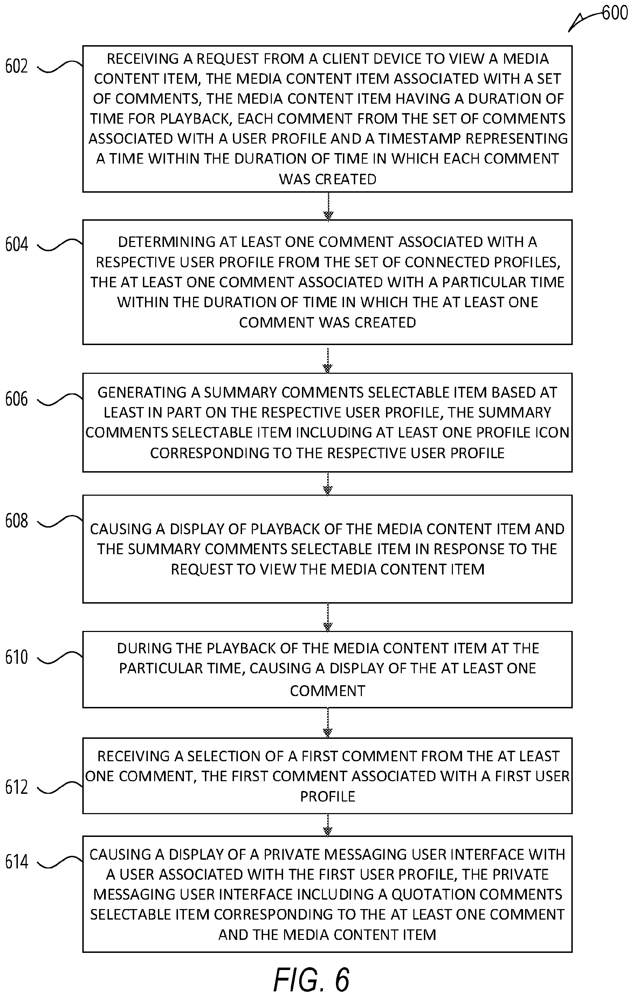

FIG. 6 illustrates a process 600 of generating a playback of a media content item in accordance with one embodiment. The operations of process 600 may be performed by any number of different systems, such as the messaging server 114 or the messaging client 104 described herein, or any portion thereof, such as a processor included in any of the systems.

At operation 602, the processor receives a request from a client device 102 to view a playback of a media content item. The media content item can be images, pictures, videos, text, or any combination thereof. FIG. 7 illustrates user interface 700 that can be displayed on the first client device 102. The media content item 702 as shown in FIG. 7 is an image or a video of a person. The user interface 700 also includes a summary comments selectable item 704, a playback progress bar 706, and a plurality of timeline markers 708. The creator name item 718 indicates the entity (e.g., XYZ) who created the media content item 702. In one embodiment, the entity XYZ is either a commercial content creator or a designated user.

The client device 102 is associated with a user. The user is associated with a viewer profile in the entity graph 306. The media content item is associated with a set of comments represented by the summary comments selectable item 704. The media content item 702 has a duration of time for playback. The duration of time is represented by the playback progress bar 706. The duration of playback for image type media content may be five seconds, for example. The duration for video type media content is however long the video lasts. Each comment associated with a media content item is associated with a user profile and a timestamp representing a particular time within the duration of playback in which each comment was created. The plurality of timeline markers 708 represent the points in time when the comments included by the summary comments selectable item 704 was created.

A user profile is associated with an entity identifier representing a user. The viewer profile of the user is associated with a set of connected profiles representing connected users in the entity graph 306 in FIG. 3. In one embodiment, the connections between the viewer profile and the connected profiles are bilateral connections (e.g., friendship connections), such that the summary comments selectable item 704 is generated only based on comments that were created by a friend or friends of the user who requests to view the media content item 702.

At operation 604, the processor determines at least one comment associated with a respective user profile from the set of connected profiles, that the at least one comment associated with a particular time within the duration of time in which the at least one comment was created. For example, the first user created the first comment at the temporal position represented by the timeline marker 708. When a requesting user views the playback of the media content item 702, the first comment is displayed only at the timeline marker 708 during the playback of the media content item 702. In one embodiment, the temporal position at the timeline marker 708 is identified by a timestamp associated with the comment stored in the video table 314 or the image table 316 in database 120. In one embodiment, the display of a particular comment lasts for a pre-defined time duration, or up to a display of an immediate later created comment, provided that the later created comment was created before the pre-defined time duration elapses.

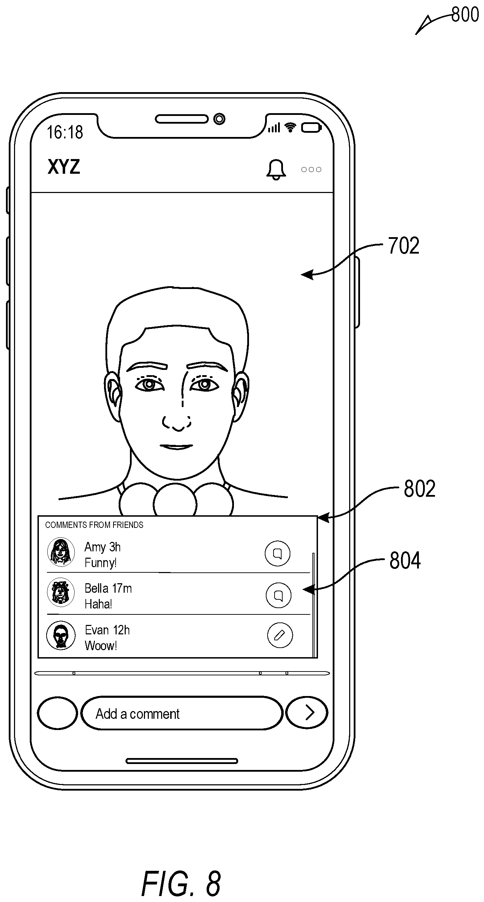

In one embodiment, in response to detecting a user selection of comments creation button 712 as shown in user interface 700, the processor may cause a display of text input item 714 for the user to enter a comment for the media content item 702. After the user inputs a comment in the text input item 714, the user may post or upload the comment to the messaging server system 108 by selecting the post button 716. The comment can be added to the comments display 802 as shown in FIG. 8. In one embodiment, the user may input the text of a user's name associated with the user profile as a portion of a comment or as a comment. The processor may generate a notification on the client device 102 associated with the user being mentioned.

At operation 606, the processor generates a summary comments selectable item 704 in the user interface 700 based at least in part on the user profile of the first user. The summary comments selectable item 704 includes at least one profile icon or avatars corresponding to the connected user profiles. As shown in FIG. 7, the summary comments selectable item 704 includes two profile icons 710, each profile icon includes an avatar of the user who created a comment for the media content item 702. A profile icon can be an image of a silhouette of the user. The summary comment selectable item 704, once selected by a user, is expandable into a comments display 802 as shown in FIG. 8. In one embodiment, if the summary comment selectable item 704 is generated based on more than a threshold number of comments, the comments display 802 only displays the threshold number of comments at a time. The user may interact with the user interface 800 using hand gestures (e.g., scrolling up and down) to locate additional comments not shown in the comments display 802. The threshold number of comments may be determined base on a plurality of factors, including the allowable length of each comment, the number of comments, etc.

At operation 608, in response to the request from the user to view the media content item 702, the processor causes a display of playback of the media content item 702 and a display of the summary comments selectable item 704 in the user interface 700. In one embodiment, prior to the display of the playback of the media content item 702 and the display of the summary comments selectable item 704, the user interface 700 may briefly display (e.g., for two seconds) at least one profile icon above each corresponding timeline marker 708 to indicate which user has created comments in which temporal position.

At operation 610, the processor causes a display of the at least one comment at the particular time or temporal position represented by the timeline marker 708 during the playback of the media content item 702. As shown in FIG. 7, if there is more than one comment during the playback, each comment is associated with a timeline marker 708 distributed based on the temporal positions on the progress bar 706. The comments are displayed in chronological order as they were created during the playback of the media content item 702.

At operation 612, the processor receives a selection of the first comment from the at least one comment. In one embodiment, the selection of a comment can be made from choosing a comment in the list of comments display 802, or the selection can be made from choosing a comment chronologically displayed during the playback of the media content item 702. For example, as shown in FIG. 8, a user may select the first comment 804 to activate a private messaging interface to engage in a private conversation with the creator of the first comment 804, e.g., Bella.

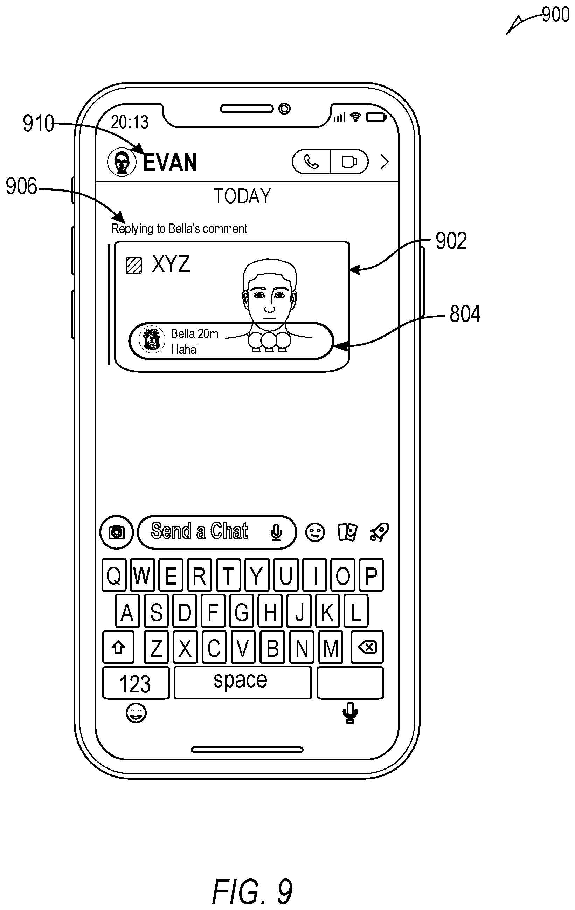

At operation 614, the processor causes a display of a private messaging user interface, such as the user interface 900 as shown in FIG. 9. The private messaging user interface 900 may include a quotation comments selectable item 902 corresponding to the selected first comment 804 and the media content item 702. The private messaging user interface 900 is a one-on-one conversation user interface with the creator of the selected comment 804. As shown in FIG. 8, the creator of the comment is Bella, also indicated by a text display 906 "replying to Bella's comment." The viewing user with whom Bella engages in a private conversation is "Evan," as indicated by the name item 910. This way, all replies to comments are conducted in a private conversation with the comment creator, the messaging server system 108 may avoid generating a complete comment thread for a display that may inadvertently cause emotional distress, such as embarrassment, to certain users.

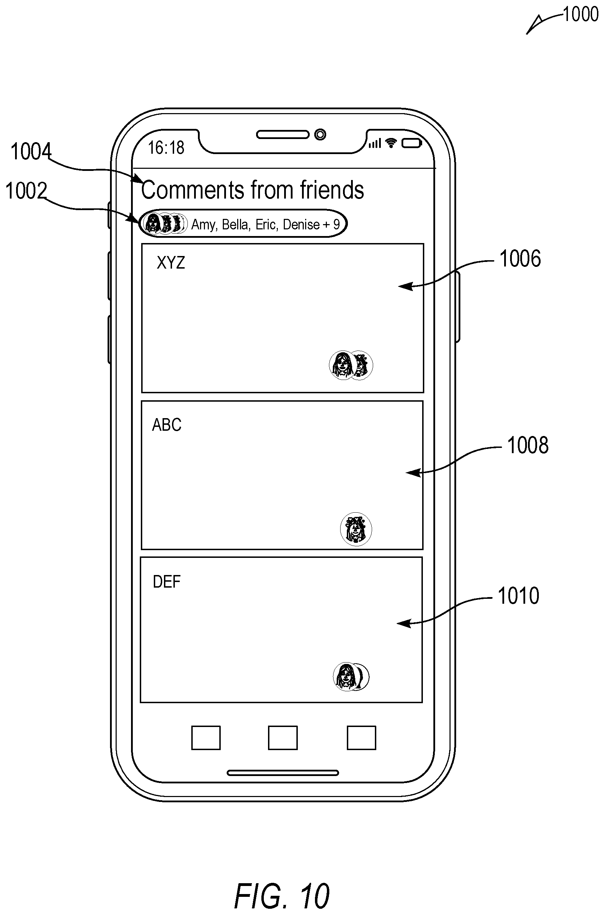

In one embodiment, the processor may generate a user interface 1000 as shown in FIG. 10. The user interface 1000 includes a summary comments display 1002, a text display 1004, and a plurality of media content items 1006, 1008, and 1010. Each media content item is associated with a collection of profile icons that are associated with comments created by users who are connected to the viewing user. In one embodiment, the profile icons are displayed in an order based on a ranking of a score of relationship affinity. For example, among the bilaterally connected users (e.g., friends), the viewing user may identify certain users as "close friends." The identified users may be associated with an affinity identifier in the respective user profile that indicates a score of relationship affinity. The affinity identifier can be stored in entity graph 306. The scores of relationship affinity may also be determined by other factors, such as the number of messages and the associated content exchanged between users, the amount of time of audio or video communication, the amount of media content items exchanged or referred between users, or other interactive activities conducted between users on the respective client device 102. The processor ranks the scores of the relationship affinity associated with each connected user who created comments. A profile icon of a connected user with the highest score or may be displayed at the first place in the summary comments display 1002 or in the summary comments selectable item 704.

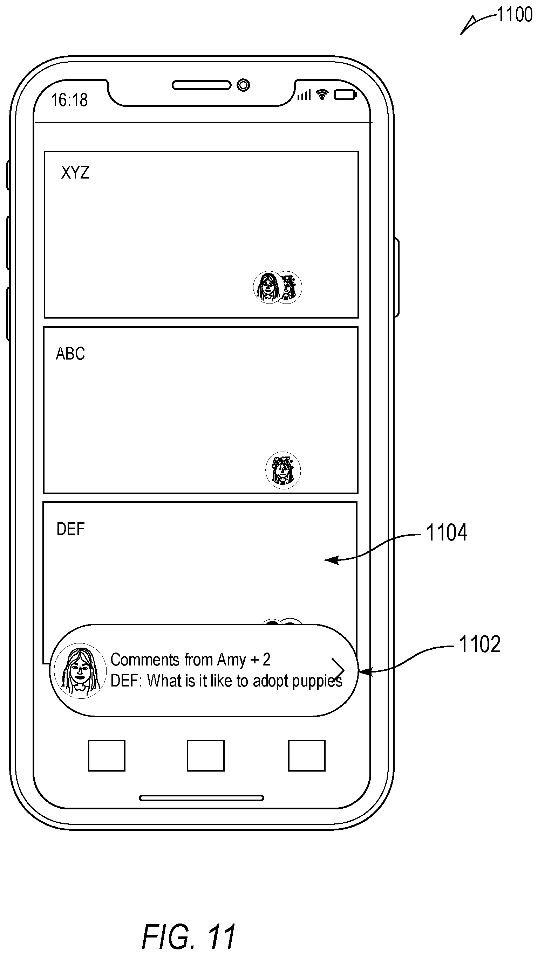

In one embodiment, as shown in FIG. 11, an "in-app" notification 1102 may be displayed when a viewing user received comments from connected users who made comments to a media content item. The notification 1102 includes a profile icon and the name of the connected user, and a title or caption of the media content item. In one embodiment, if the processor determines there are multiple comments created by multiple connected users, the notification 1102 may only display the profile icon of the connected user with the highest score of relationship affinity.

In one embodiment, the notification 1102 displays a number of connected users who created comments associated with a media content item. For example, as shown in user interface 1100, the number of connected users or friends associated with the media content item titled "What is it like to adopt puppies" is three, including "Amy" and two other comments indicated by the text display "+2."

In one embodiment, a media content item, the processor determines if a pre-determined time period has elapsed since a previous notification associated with the media content item has been generated on the client device 102, the previous notification corresponding to a second comment. Upon detecting the pre-determined time period has elapsed, the processor generates a subsequent notification on the client device in response to receiving a third comment for the media content item. The pre-determined time period represents a cool-down period, such as three hours. The second comment is associated with a second user profile from the set of connected profiles, and the third comment is associated with a third user profile from the set of connected profiles.

In one embodiment, if the second comment and the third comments are both generated by the same user from the set of the connected profiles, and this same user is determined to be associated with an affinity identifier corresponding to a high score, the processor may generate the subsequent notification before the pre-determined time period has elapsed.

FIG. 7 illustrates a user interface 700 displayed on a client device in accordance with one embodiment. The user interface 700 is caused to be displayed on a client device 102 when a user requests to view a playback of a media content item 702. A user may select the summary comments selectable item 704 to activate the comments display 802 in FIG. 8. A user may create comments by selecting comments creation button 712, and input comments in the text input item 714, and posts or upload the comments by selecting post button 716. The uploaded comments will be subsequently displayed in the comments display 802. The user interface 700 includes a progress bar 706 and a plurality of timeline markers 708. The progress bar 706 represents the duration of time for playback of the media content item 702. The plurality of timeline markers 708 represent the points in time when the comments included by the summary comments selectable item 704 was created.

FIG. 8 illustrates a user interface 800 displayed on a client device in accordance with one embodiment. The user interface 800 includes the comments display 802. A user may view all comments referred by the summary comments selectable item 704. The user may also select any of the comments, such as the first comment 804, to activate a private messaging user interface 900, and engage in a private conversation with the creator of the selected comment.

FIG. 9 illustrates a user interface 900 displayed on a client device in accordance with one embodiment. The user interface 900 is a private messaging user interface. In response to detecting a user selection of the first comment 804, the user may respond individually to the creator (e.g., Bella) of the first comment. The private messaging user interface 900 may include a quotation comments selectable item 902 corresponding to the selected first comment 804 and the media content item 702. The quotation comments selectable item 902 includes a quotation of the selected first comment 804, and a pictorial overview of the media content item 702. The quotation comments selectable item 902 is associated with an HTTP link that may direct the user back to the user interface 700 once the link is activated by a user selection of item 902.

FIG. 10 illustrates a user interface 1000 displayed on a client device in accordance with one embodiment. The user interface 1000 includes a summary comments display 1002, a text display 1004, and a plurality of media content items 1006, 1008, and 1010. Each media content item is associated with a collection of profile icons that are associated with comments created by users who are connected to the viewing user. In an embodiment, each media content item is embedded with an HTTP link that once activated upon user selection, may direct the user to a media content playback user interface, such as the user interface 700 as shown in FIG. 7.

FIG. 11 illustrates a user interface 1100 displayed on a client device in accordance with one embodiment. The user interface 1100 includes an "in-app" notification 1102. The notification 1102 includes a profile icon and the name of the connected user, the name of the media content creator, and a title or caption of the media content item. In an embodiment, the notification 1102 is embedded with an HTTP link that, once activated upon user selection, may direct the user to a media content playback user interface associated with the media content item referred by in the notification, such as the media content item 1104 created by content creator "DEF" as shown in FIG. 11.

### MACHINE ARCHITECTURE

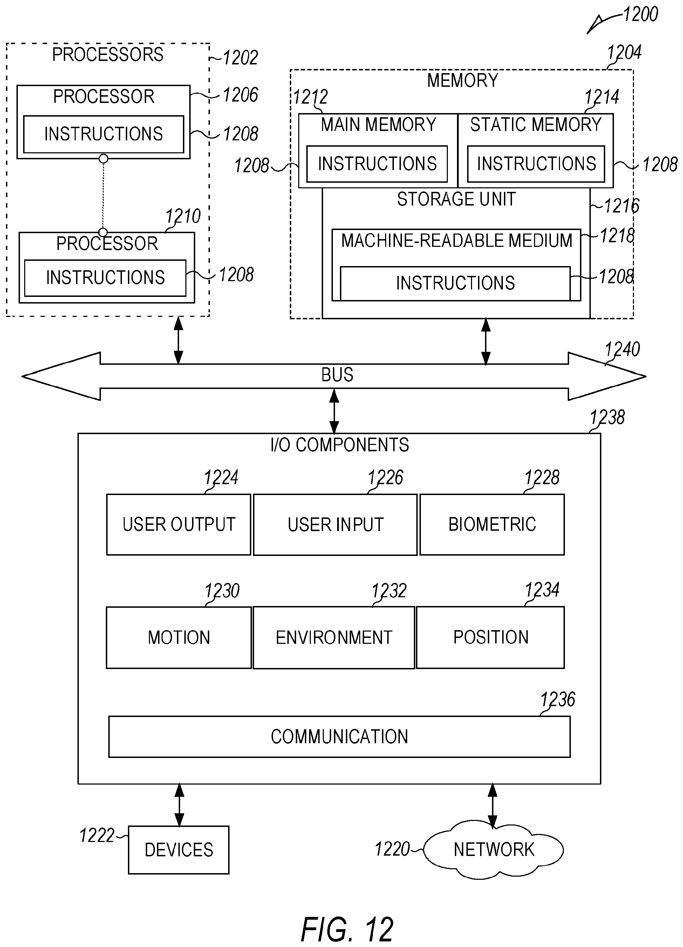

FIG. 12 is a diagrammatic representation of the machine 1200 in the form of a computer system within which instructions 1208 (e.g., software, a program, an application, an applet, an app, or other executable code) for causing the machine 1200 to perform any one or more of the methodologies discussed herein may be executed. For example, the instructions 1208 may cause the machine 1200 to execute any one or more of the methods described herein. The instructions 1208 transform the general, non-programmed machine 1200 into a particular machine 1200 programmed to carry out the described and illustrated functions in the manner described. The machine 1200 may operate as a standalone device or may be coupled (e.g., networked) to other machines. In a networked deployment, the machine 1200 may operate in the capacity of a server machine or a client machine in a server-client network environment, or as a peer machine in a peer-to-peer (or distributed) network environment. The machine 1200 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smartphone, a mobile device, a wearable device (e.g., a smartwatch), a smart home device (e.g., a smart appliance), other smart devices, a web appliance, a network router, a network switch, a network bridge, or any machine capable of executing the instructions 1208, sequentially or otherwise, that specify actions to be taken by the machine 1200. Further, while only a single machine 1200 is illustrated, the term "machine" shall also be taken to include a collection of machines that individually or jointly execute the instructions 1208 to perform any one or more of the methodologies discussed herein. The machine 1200, for example, may comprise the client device 102 or any one of a number of server devices forming part of the messaging server system 108. In some examples, the machine 1200 may also comprise both client and server systems, with certain operations of a particular method or algorithm being performed on the server-side and with certain operations of the particular method or algorithm being performed on the client-side.

The machine 1200 includes one or more processors 1202, memory 1204, and input/output I/O components 1238, which may be configured to communicate with each other via a bus 1240. In an example, the processors 1202 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, a processor 1206 and a processor 1210 that execute the instructions 1208. The term "processor" is intended to include multi-core processors that may comprise two or more independent processors (sometimes referred to as "cores") that may execute instructions contemporaneously. Although FIG. 12 shows multiple processors 1202, the machine 1200 may include a single processor with a single-core, a single processor with multiple cores (e.g., a multi-core processor), multiple processors with a single core, multiple processors with multiples cores, or any combination thereof.

The memory 1204 includes a main memory 1212, a static memory 1214, and a storage unit 1216, both accessible to the processors 1202 via the bus 1240. The main memory 1204, the static memory 1214, and storage unit 1216 store the instructions 1208 embodying any one or more of the methodologies or functions described herein. The instructions 1208 may also reside, completely or partially, within the main memory 1212, within the static memory 1214, within machine-readable medium 1218 within the storage unit 1216, within at least one of the processors 1202 (e.g., within the processor's cache memory), or any suitable combination thereof, during execution thereof by the machine 1200.

The I/O components 1238 may include a wide variety of components to receive input, provide output, produce output, transmit information, exchange information, capture measurements, and so on. The specific I/O components 1238 that are included in a particular machine will depend on the type of machine. For example, portable machines such as mobile phones may include a touch input device or other such input mechanisms, while a headless server machine will likely not include such a touch input device. It will be appreciated that the I/O components 1238 may include many other components that are not shown in FIG. 12. In various examples, the I/O components 1238 may include user output components 1224 and user input components 1226. The user output components 1224 may include visual components (e.g., a display such as a plasma display panel (PDP), a lightemitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The user input components 1226 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and force of touches or touch gestures, or other tactile input components), audio input components (e.g., a microphone), and the like.

In further examples, the I/O components 1238 may include biometric components 1228, motion components 1230, environmental components 1232, or position components 1234, among a wide array of other components. For example, the biometric components 1228 include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1230 include acceleration sensor components (e.g., accelerometer), gravitation sensor components, rotation sensor components (e.g., gyroscope).

The environmental components 1232 include, for example, one or cameras (with still image/photograph and video capabilities), illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment.

With respect to cameras, the client device 102 may have a camera system comprising, for example, front cameras on a front surface of the client device 102 and rear cameras on a rear surface of the client device 102. The front cameras may, for example, be used to capture still images and video of a user of the client device 102 (e.g., "selfies"), which may then be augmented with augmentation data (e.g., filters) described above. The rear cameras may, for example, be used to capture still images and videos in a more traditional camera mode, with these images similarly being augmented with augmentation data. In addition to front and rear cameras, the client device 102 may also include a 360° camera for capturing 360° photographs and videos.

Further, the camera system of a client device 102 may include dual rear cameras (e.g., a primary camera as well as a depth-sensing camera), or even triple, quad or penta rear camera configurations on the front and rear sides of the client device 102. These multiple cameras systems may include a wide camera, an ultra-wide camera, a telephoto camera, a macro camera and a depth sensor, for example.

The position components 1234 include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1238 further include communication components 1236 operable to couple the machine 1200 to a network 1220 or devices 1222 via respective coupling or connections. For example, the communication components 1236 may include a network interface component or another suitable device to interface with the network 1220. In further examples, the communication components 1236 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1222 may be another machine or any of a wide variety of peripheral devices (e.g., a peripheral device coupled via a USB).

Moreover, the communication components 1236 may detect identifiers or include components operable to detect identifiers. For example, the communication components 1236 may include Radio Frequency Identification (RFID) tag reader components, NFC smart tag detection components, optical reader components (e.g., an optical sensor to detect one-dimensional bar codes such as Universal Product Code (UPC) bar code, multidimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1236, such as location via Internet Protocol (IP) geolocation, location via Wi-Fi^{®} signal triangulation, location via detecting an NFC beacon signal that may indicate a particular location, and so forth.

The various memories (e.g., main memory 1212, static memory 1214, and memory of the processors 1202) and storage unit 1216 may store one or more sets of instructions and data structures (e.g., software) embodying or used by any one or more of the methodologies or functions described herein. These instructions (e.g., the instructions 1208), when executed by processors 1202, cause various operations to implement the disclosed examples.

The instructions 1208 may be transmitted or received over the network 1220, using a transmission medium, via a network interface device (e.g., a network interface component included in the communication components 1236) and using any one of several well-known transfer protocols (e.g., hypertext transfer protocol (HTTP)). Similarly, the instructions 1208 may be transmitted or received using a transmission medium via a coupling (e.g., a peer-to-peer coupling) to the devices 1222.

### SOFTWARE ARCHITECTURE

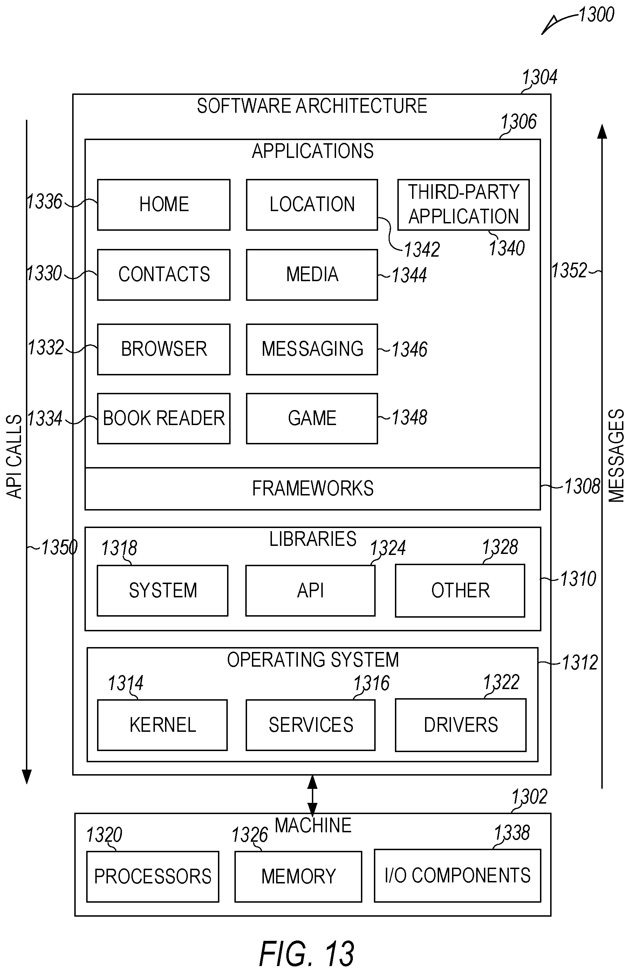

FIG. 13 is a block diagram 1300 illustrating a software architecture 1304, which can be installed on any one or more of the devices described herein. The software architecture 1304 is supported by hardware such as a machine 1302 that includes processors 1320, memory 1326, and I/O components 1338. In this example, the software architecture 1304 can be conceptualized as a stack of layers, where each layer provides a particular functionality. The software architecture 1304 includes layers such as an operating system 1312, libraries 1310, frameworks 1308, and applications 1306. Operationally, the applications 1306 invoke API calls 1350 through the software stack and receive messages 1352 in response to the API calls 1350.

The operating system 1312 manages hardware resources and provides common services. The operating system 1312 includes, for example, a kernel 1314, services 1316, and drivers 1322. The kernel 1314 acts as an abstraction layer between the hardware and the other software layers. For example, the kernel 1314 provides memory management, processor management (e.g., scheduling), component management, networking, and security settings, among other functionality. The services 1316 can provide other common services for the other software layers. The drivers 1322 are responsible for controlling or interfacing with the underlying hardware. For instance, the drivers 1322 can include display drivers, camera drivers, BLUETOOTH^{®} or BLUETOOTH^{®} Low Energy drivers, flash memory drivers, serial communication drivers (e.g., USB drivers), WI-FI^{®} drivers, audio drivers, power management drivers, and so forth.

The libraries 1310 provide a common low-level infrastructure used by the applications 1306. The libraries 1310 can include system libraries 1318 (e.g., C standard library) that provide functions such as memory allocation functions, string manipulation functions, mathematic functions, and the like. In addition, the libraries 1310 can include API libraries 1324 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic content on a display), database libraries (e.g., SQLite to provide various relational database functions), web libraries (e.g., WebKit to provide web browsing functionality), and the like. The libraries 1310 can also include a wide variety of other libraries 1328 to provide many other APIs to the applications 1306.

The frameworks 1308 provide a common high-level infrastructure that is used by the applications 1306. For example, the frameworks 1308 provide various graphical user interface (GUI) functions, high-level resource management, and high-level location services. The frameworks 1308 can provide a broad spectrum of other APIs that can be used by the applications 1306, some of which may be specific to a particular operating system or platform.

In an example, the applications 1306 may include a home application 1336, a contacts application 1330, a browser application 1332, a book reader application 1334, a location application 1342, a media application 1344, a messaging application 1346, a game application 1348, and a broad assortment of other applications such as a third-party application 1340. The applications 1306 are programs that execute functions defined in the programs. Various programming languages can be employed to create one or more of the applications 1306, structured in a variety of manners, such as object-oriented programming languages (e.g., Objective-C, Java, or C++) or procedural programming languages (e.g., C or assembly language). In a specific example, the third-party application 1340 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 1340 can invoke the API calls 1350 provided by the operating system 1312 to facilitate functionality described herein.

### PROCESSING COMPONENTS

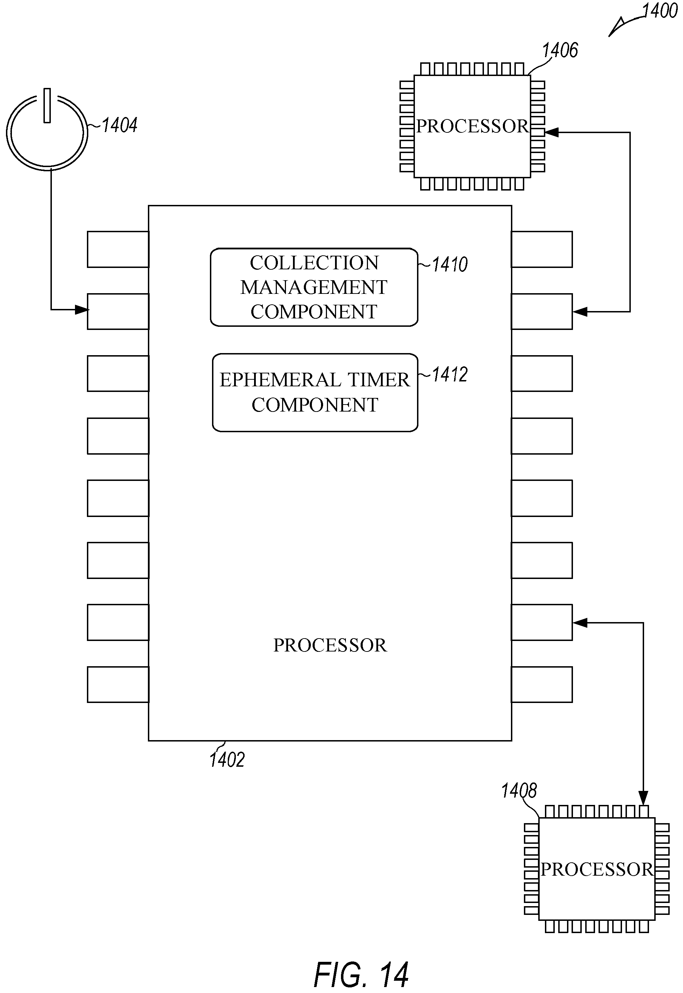

Turning now to FIG. 14, there is shown a diagrammatic representation of a processing environment 1400, which includes a processor 1402, a processor 1406, and a processor 1408 (e.g., a GPU, CPU or combination thereof).

The processor 1402 is shown to be coupled to a power source 1404, and to include (either permanently configured or temporarily instantiated) modules, namely a collection management component 1410 and an ephemeral timer component 1412. The collection management component 1410 operationally generates media content items and comments, manage the playback of the media content items and the display of the associated comments, and generates private messaging user interfaces in response to detecting a user selection of comments. The ephemeral timer component 1412 operationally manages the pre-determined duration of time of media content playback, and a pre-defined time duration for a display of a comment during a media content playback. As illustrated, the processor 1402 is communicatively coupled to both the processor 1406 and the processor 1408.

### GLOSSARY

"Carrier signal" refers to any intangible medium that is capable of storing, encoding, or carrying instructions for execution by the machine, and includes digital or analog communications signals or other intangible media to facilitate communication of such instructions. Instructions may be transmitted or received over a network using a transmission medium via a network interface device.

"Client device" refers to any machine that interfaces to a communications network to obtain resources from one or more server systems or other client devices. A client device may be, but is not limited to, a mobile phone, desktop computer, laptop, portable digital assistants (PDAs), smartphones, tablets, ultrabooks, netbooks, laptops, multi-processor systems, microprocessor-based or programmable consumer electronics, game consoles, set-top boxes, or any other communication device that a user may use to access a network.

"Communication network" refers to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other types of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long-range protocols, or other data transfer technology.

"Component" refers to a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner. In various example embodiments, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an application specific integrated circuit (ASIC). A hardware component may also include programmable logic or circuitry that is temporarily configured by software to perform certain operations. For example, a hardware component may include software executed by a general-purpose processor or other programmable processor. Once configured by such software, hardware components become specific machines (or specific components of a machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software), may be driven by cost and time considerations. Accordingly, the phrase "hardware component"(or "hardwareimplemented component") should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In embodiments in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of a method may be performed by one or more processors 1406 or processor-implemented components. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an API). The performance of certain of the operations may be distributed among the processors, not only residing within a single machine, but deployed across a number of machines. In some example embodiments, the processors or processor-implemented components may be located in a single geographic location (e.g., within a home environment, an office environment, or a server farm). In other example embodiments, the processors or processor-implemented components may be distributed across a number of geographic locations.

"Computer-readable storage medium" refers to both machine-storage media and transmission media. Thus, the terms include both storage devices/media and carrier waves/modulated data signals. The terms "machine-readable medium," "computer-readable medium" and "device-readable medium" mean the same thing and may be used interchangeably in this disclosure.

"Ephemeral message" refers to a message that is accessible for a time-limited duration. An ephemeral message may be a text, an image, a video and the like. The access time for the ephemeral message may be set by the message sender. Alternatively, the access time may be a default setting or a setting specified by the recipient. Regardless of the setting technique, the message is transitory.

"Machine storage medium" refers to a single or multiple storage devices and media (e.g., a centralized or distributed database, and associated caches and servers) that store executable instructions, routines and data. The term shall accordingly be taken to include, but not be limited to, solid-state memories, and optical and magnetic media, including memory internal or external to processors. Specific examples of machine-storage media, computer-storage media and device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks The terms "machine-storage medium," "device-storage medium," "computer-storage medium" mean the same thing and may be used interchangeably in this disclosure. The terms "machine-storage media," "computer-storage media," and "device-storage media" specifically exclude carrier waves, modulated data signals, and other such media, at least some of which are covered under the term "signal medium."

"Non-transitory computer-readable storage medium" refers to a tangible medium that is capable of storing, encoding, or carrying the instructions for execution by a machine.

"Signal medium" refers to any intangible medium that is capable of storing, encoding, or carrying the instructions for execution by a machine and includes digital or analog communications signals or other intangible media to facilitate communication of software or data. The term "signal medium" shall be taken to include any form of a modulated data signal, carrier wave, and so forth. The term "modulated data signal" means a signal that has one or more of its characteristics set or changed in such a matter as to encode information in the signal. The terms "transmission medium" and "signal medium" mean the same thing and may be used interchangeably in this disclosure.

## Claims

1. A method (600) performed by one or more processors of a messaging server (114), the method comprising:
receiving (602) a request from a client device (102) to view a media content item (702), wherein the client device (102) is associated to a user, the user being associated to a viewer profile in an entity graph (306) of connected profiles, and the media content item (702) is associated with a set of comments, the media content item having a duration of time for playback, each comment from the set of comments associated with a user profile and a timestamp representing a time within the duration of time in which each comment was created;
determining (604) at least one comment associated with a respective user profile from the set of connected profiles, the at least one comment associated with a particular time within the duration of time in which the at least one comment was created;
generating (606) a summary comments selectable item (704) in the user interface (700) based at least in part on the respective user profile, the summary comments selectable item (704) including at least one profile icon corresponding to the respective user profile;
causing (608) a display of playback of the media content item (702) and the summary comments selectable item (704) in response to the request to view the media content item (702); and
during the playback of the media content item (702) at the particular time, causing (610) a display of the at least one comment.

2. The method of claim 1, wherein the summary comments selectable item (704) is expandable into a comments display upon selection of the summary comments selectable item.

3. The method of any preceding claim, comprising causing display of the at least one comment up to a display of an immediate later created comment, provided that the later created comment was created before a pre-defined time duration elapses.

4. The method of any preceding claim, comprising determining that a plurality of comments occur during the playback and associating each comment with a timeline marker, wherein the timeline markers are distributed on a progress bar (706) based on their temporal positions, and wherein the comments are displayed in chronological order.

5. The method of claim 1, further comprising:
in response to detecting a user selection of the summary comments selectable item (704), causing a display of the at least one comment associated with the respective user profile.

6. The method of claim 1, further comprising:
receiving (612) a selection of a first comment from the at least one comment, the first comment associated with a first user profile; and
causing (614) a display of a private messaging user interface with a user associated with the first user profile, the private messaging user interface including a quotation comments selectable item corresponding to the first comment and the media content item.

7. The method of claim 1, wherein the at least one profile icon is displayed in an order based on a ranking of a score of relationship affinity.

8. The method of claim 1, wherein the media content item (702) is generated by a designated user corresponding to a designated user profile that is absent from the set of connected profiles.

9. The method of claim 8, wherein:
the designated user profile is associated with a number of follower user profiles in the entity graph exceeding a pre-determined threshold; or
the designated user is third party publisher.

10. The method of claim 1, further comprising:
determining if a pre-determined time period has elapsed since a previous notification associated with the media content item has been generated on the client device, the previous notification corresponding to a second comment; and
generating a subsequent notification on the client device in response to receiving a third comment for the media content item.

11. The method of claim 10, wherein the second comment is associated with a second user profile from the set of connected profiles, the third comment is associated with a third user profile from the set of connected profiles.

12. A messaging server (114) comprising:
one or more processors (1202); and
a non-transitory computer readable storage medium (1204) comprising instructions that when executed by the one or more processors (1202) cause the one or more processors (1202) to perform all the steps of the method of claim 1.

13. A computer-readable non-transitory storage medium (1204) having instruction data executable by the messaging server (114) of claim 12 to cause the messaging server (114) to perform all the steps of the method of claim 1.

## Patentansprüche

1. Verfahren (600), das durch einen oder mehrere Prozessoren eines Nachrichtenübermittlungsservers (114) durchgeführt wird, wobei das Verfahren Folgendes umfasst:
Empfangen (602) einer Anforderung von einer Clientvorrichtung (102) zum Betrachten ein Medieninhaltselement (702), wobei die Clientvorrichtung (102) mit einem Benutzer assoziiert ist, wobei der Benutzer mit einem Betrachterprofil in einem Entitätsgraphen (306) von verbundenen Profilen assoziiert ist und das Medieninhaltselement (702) mit einem Satz von Kommentaren assoziiert ist, wobei das Medieninhaltselement eine Zeitdauer zur Wiedergabe aufweist, wobei jeder Kommentar von dem Satz von Kommentaren mit einem Benutzerprofil und einem Zeitstempel, der einen Zeitpunkt innerhalb der Zeitdauer repräsentiert, zu dem jeder Kommentar erstellt wurde, assoziiert ist;
Bestimmen (604) mindestens eines Kommentars, der mit einem jeweiligen Benutzerprofil aus dem Satz von verbundenen Profilen assoziiert ist, wobei der mindestens eine Kommentar, der mit einem jeweiligen Zeitpunkt innerhalb der Zeitdauer, zu dem ein Kommentar erstellt wurde, assoziiert ist;
Generieren (606) eines zusammenfassenden kommentarauswählbaren Elements (704) in der Benutzerschnittstelle (700) mindestens zum Teil basierend auf dem jeweiligen Benutzerprofil, wobei das zusammenfassende kommentarauswählbare Element(704) mindestens ein Profilsymbol einschließt, das dem jeweiligen Benutzerprofil entspricht;
Veranlassen (608) einer Anzeige der Wiedergabe des Medieninhaltselement (702) und des zusammenfassenden kommentarauswählbaren Elements (704) als Reaktion auf die Anforderung zum Betrachten des Medieninhaltselements (702); und
während der Wiedergabe des Medieninhaltselements (702) zu dem jeweiligen Zeitpunkt, Veranlassen ( 610) einer Anzeige des mindestens einen Kommentars.

2. Verfahren nach Anspruch 1, wobei das zusammenfassende kommentarauswählbare Element (704) bei Auswahl des zusammenfassenden kommentarauswählbaren Elements in eine Kommentaranzeige erweiterbar ist.

3. Verfahren nach einem vorhergehenden Anspruch, das das Veranlassen einer Anzeige des mindestens einen Kommentars bis zu einer Anzeige eines dazwischenliegenden später erstellten Kommentars umfasst, vorausgesetzt, dass der später erstellte Kommentar erstellt wurde, bevor eine vordefinierte Zeitdauer abläuft.

4. Verfahren nach einem vorhergehenden Anspruch, dass das Bestimmen, dass eine Vielzahl von Kommentaren während der Wiedergabe auftreten, und das Assoziieren von jedem Kommentar mit einer Zeitlinienmarkierung umfasst, wobei die Zeitlinienmarkierungen auf einer Fortschrittsleiste (706) basierend auf ihren zeitlichen Positionen verteilt sind und wobei die Kommentare in einer chronologischen Reihenfolge angezeigt werden.

5. Verfahren nach Anspruch 1, das ferner Folgendes umfasst:
als Reaktion auf das Detektieren einer Benutzerauswahl zusammenfassenden kommentarauswählbaren Elements (704), Veranlassen einer Anzeige des mindestens einen Kommentars, der mit dem jeweiligen Benutzerprofil assoziiert.

6. Verfahren nach Anspruch 1, das ferner Folgendes umfasst:
Empfangen (612) einer Auswahl eines Kommentars aus dem mindestens einem Kommentar, wobei der erste Kommentar mit einem ersten Benutzerprofil assoziiert ist; und
Veranlassen (614) einer Anzeige einer privaten Nachrichtenübermittlungsbenutzerschnittstelle mit einem Benutzer, der mit dem ersten Benutzerprofil assoziiert ist, wobei die private Nachrichtenübermittlungsbenutzerschnittstelle ein zitatkommentarauswählbares Element einschließt, das dem ersten Kommentar und dem Medieninhaltselement entspricht.

7. Verfahren nach Anspruch 1, wobei das mindestens eine Profilsymbol in einer Reihenfolge basierend auf einer Einstufung eines Scores für die Beziehungsaffinität angezeigt wird.

8. Verfahren nach Anspruch1, wobei das Medieninhaltselement (702) durch einen designierten Benutzer generiert wird, der einem designierten Benutzerprofil entspricht, das von dem Satz von verbundenen Profilen abwesend ist.

9. Verfahren nach Anspruch 8, wobei:
das designierte Benutzerprofil damit assoziiert ist, dass eine Anzahl an Folgerbenutzerprofilen in dem Entitätsgraphen eine vorherbestimmende Schwelle überschreitet; oder
der designierte Benutzer ein Drittparteiherausgeber ist.

10. Verfahren nach Anspruch 1, das ferner Folgendes umfasst:
Bestimmen, ob eine vorherbestimmte Zeitperiode abgelaufen ist, seit eine vorangegangene Benachrichtigung, die mit dem Medieninhaltselement assoziiert ist, auf der Clientvorrichtung generiert wurde, wobei die vorangegangene Benachrichtigung einem zweiten Kommentar entspricht; und
Generieren einer anschließenden Benachrichtigung auf der Clientvorrichtung in Reaktion auf das Empfangen eines dritten Kommentars für das Medieninhaltselement.

11. Verfahren nach Anspruch 10,
wobei zweite Kommentar mit einem zweiten Benutzerprofil aus dem Satz von verbundenen Profilen assoziiert ist, wobei der dritte Kommentar mit einem dritten Benutzerprofil aus dem Satz von verbundenen Profilen assoziiert ist.

12. Nachrichtenübermittlungsserver(114)system, das Folgendes umfasst:
einen oder mehrere Prozessoren (1202); und
ein nicht transitorische rechnerlesbares Speicherungsmedium (1204), das Anweisungen umfasst, die, wenn sie durch den einen oder die mehreren Prozessoren (1202) ausgeführt werden, den einen oder die mehreren Prozessoren (1202) veranlassen, alle Schritte des Verfahrens nach Anspruch 1 durchzuführen.

13. Rechnerlesbares nicht transitorisches Speicherungsmedium (1204), das Anweisungsdaten speichert, die durch den Nachrichtenübermittlungsserver (114) nach Anspruch 12 ausführbar sind, um den Nachrichtenübermittlungsserver (114) zu veranlassen, alle Schritte des Verfahrens nach Anspruch 1 durchzuführen.

## Revendications

1. Procédé (600) réalisé par un ou plusieurs processeurs d'un serveur de messagerie (114), le procédé consistant à :
recevoir (602) une demande en provenance d'un dispositif client (102) pour visualiser un élément de contenu multimédia (702), le dispositif client (102) étant associé à un utilisateur, l'utilisateur étant associé à un profil visualiseur sur un graphe d'entité (306) de profils connectés, et l'élément de contenu multimédia (702) étant associé à un ensemble de commentaires, l'élément de contenu multimédia ayant une durée de lecture, chaque commentaire de l'ensemble de commentaires étant associé à un profil d'utilisateur et à un horodatage représentant un moment où, au cours de la durée, chaque commentaire a été créé ;
déterminer (604) au moins un commentaire associé à un profil d'utilisateur respectif parmi l'ensemble de profils connectés, l'au moins un commentaire étant associé à un moment particulier, au cours de la durée, où l'au moins un commentaire a été créé ;
générer (606) un élément sélectionnable de commentaires résumés (704) sur l'interface d'utilisateur (700) sur la base, au moins en partie, du profil d'utilisateur respectif, l'élément sélectionnable de commentaires résumés (704) comprenant au moins une icône de profil correspondant au profil d'utilisateur respectif ;
provoquer (608) un affichage de lecture de l'élément de contenu multimédia (702) et de l'élément sélectionnable de commentaires résumés (704) en réponse à la demande de visualisation de l'élément de contenu multimédia (702) ; et
pendant la lecture de l'élément de contenu multimédia (702) au moment particulier, provoquer (610) un affichage de l'au moins un commentaire.

2. Procédé selon la revendication 1, l'élément sélectionnable de commentaires résumés (704) pouvant être développé en un affichage de commentaires lors de la sélection de l'élément sélectionnable de commentaires résumés.

3. Procédé selon l'une quelconque des revendications précédentes, consistant à provoquer l'affichage de l'au moins un commentaire jusqu'à un affichage d'un commentaire créé immédiatement après, à condition que le commentaire créé après ait été créé avant l'expiration d'une durée prédéfinie.

4. Procédé selon l'une quelconque des revendications précédentes, consistant à déterminer qu'une pluralité de commentaires se produisent pendant la lecture et à associer chaque commentaire à un marqueur de chronologie, les marqueurs de chronologie étant répartis sur une barre de progression (706) sur la base de leurs positions temporelles, et les commentaires étant affichés dans l'ordre chronologique.

5. Procédé selon la revendication 1, consistant en outre à :
en réponse à la détection d'une sélection par l'utilisateur de l'élément sélectionnable de commentaires résumés (704), provoquer un affichage de l'au moins un commentaire associé au profil d'utilisateur respectif.

6. Procédé selon la revendication 1, consistant en outre à :
recevoir (612) une sélection d'un premier commentaire parmi l'au moins un commentaire, le premier commentaire étant associé à un premier profil d'utilisateur ; et
provoquer (614) un affichage d'une interface d'utilisateur de messagerie privée avec un utilisateur associé au premier profil d'utilisateur, l'interface d'utilisateur de messagerie privée comprenant un élément sélectionnable de commentaires de citation correspondant au premier commentaire et à l'élément de contenu multimédia.

7. Procédé selon la revendication 1, l'au moins une icône de profil étant affichée dans un ordre basé sur un classement d'un score d'affinité relationnelle.

8. Procédé selon la revendication 1, l'élément de contenu multimédia (702) étant généré par un utilisateur désigné correspondant à un profil d'utilisateur désigné qui est absent de l'ensemble de profils connectés.

9. Procédé selon la revendication 8,
le profil d'utilisateur désigné étant associé à un nombre de profils d'utilisateur abonnés sur le graphe d'entité dépassant un seuil prédéterminé ; ou
l'utilisateur désigné étant un éditeur tiers.

10. Procédé selon la revendication 1, consistant en outre à :
déterminer si une période de temps prédéterminée s'est écoulée depuis qu'une notification précédente associée à l'élément de contenu multimédia a été générée sur le dispositif client, la notification précédente correspondant à un deuxième commentaire ; et
générer une notification ultérieure sur le dispositif client en réponse à la réception d'un troisième commentaire pour l'élément de contenu multimédia.

11. Procédé selon la revendication 10, le deuxième commentaire étant associé à un deuxième profil d'utilisateur parmi l'ensemble de profils connectés, le troisième commentaire étant associé à un troisième profil d'utilisateur parmi l'ensemble de profils connectés.

12. Serveur de messagerie (114), comprenant :
un ou plusieurs processeurs (1202) ; et
un support de stockage non transitoire lisible par ordinateur (1204), comprenant des instructions qui, lorsqu'elles sont exécutées par le ou les processeurs (1202), amènent le ou les processeurs (1202) à effectuer toutes les étapes du procédé selon la revendication 1.

13. Support de stockage non transitoire lisible par ordinateur (1204), stockant des données d'instructions exécutables par le serveur de messagerie (114) selon la revendication 12 afin d'amener le serveur de messagerie (114) à effectuer toutes les étapes du procédé selon la revendication 1.
